# EUROPEAN PATENT APPLICATION

(11) **EP 4 835 561 A2**
(43) Date of publication of application: **04.11.2026**
(21) Application number: 26196814.3
(22) Date of filing: 03.01.2019
(51) Int. Cl.: G03B 5/00

(54) **FOLDED CAMERA WITH OPTICAL IMAGE STABILIZATION**

(30) Priority: 12.02.2018 US 201862629298 P
(62) Document number(s) of the earlier application(s) in accordance with Art. 76 EPC: 25182864.6 / 4 600 732; 24187256.3 / 4 439 169; 23153032.0 / 4 191 315; 19751717.0 / 3 707 893
(71) Applicant: Corephotonics Ltd., 6492103 Tel Aviv (IL)
(72) Inventor: BACHAR, Gil, Tel Aviv (IL)
(74) Representative: IPrime Rentsch Kaelin AG

(57) **Abstract**

Folded digital camera comprising a lens having a lens optical axis, an image sensor and first and second optical path folding elements (OPFEs), in which the second OPFE is closest to the image sensor, wherein the lens is operative to move in a first direction substantially parallel to the lens optical axis and in a second direction substantially perpendicular to first and second optical paths, wherein the second OPFE is operative to move in the first direction, and wherein the combined motion of the lens and of the second OPFE is operative to provide focus and to compensate for tilts of the camera around the first and second directions.

## Description

### FIELD

Embodiments disclosed herein relate in general to digital cameras and in particular to folded digital cameras and dual folded-upright cameras incorporated in mobile electronic devices such as smartphones.

### BACKGROUND

A typical digital camera includes an image sensor (or simply "sensor") and a lens. The lens forms an image on the sensor. A lens module may include several lens elements, typically assembled in one lens barrel. Folded cameras (FCs) and double-folded cameras (DFCs) are known, see for example co-owned international patent application PCT/IB2015/056004. Folded cameras include an additional optical path folding element (OPFE) that folds the light from object to lens. The OPFE may be for example a prism or a mirror. Double-folded cameras include a second OPFE that folds the light from the lens to the image sensor. Such camera may have focus and auto-focus capabilities. FCs with optical image stabilization (OIS) capabilities are also known.

Folded cameras with a "distributed" (or 'split") lens are folded cameras in which one or more of the lens elements is installed in the optical path between an imaged object and the OPFE, while other lens elements are installed in the optical path between the OPFE and the image sensor (see e.g. the Asus ZenFone Zoom).

### SUMMARY

In exemplary embodiments, there are provided digital cameras comprising: a lens having a lens optical axis, an image sensor, a first OPFE for folding light arriving from an object in a first optical path to a second optical path substantially aligned with the lens optical axis, and a second OPFE for folding light from the second optical path to a third optical path toward the image sensor, wherein the third optical path is substantially parallel with the first optical path, wherein the first and third optical paths are substantially orthogonal to the second optical path, wherein the lens is operative to move in a first direction substantially parallel to the lens optical axis and in a second direction substantially perpendicular to both the first and second optical paths, wherein the second OPFE is operative to move in the first direction, and wherein the combined motion of the lens and of the second OPFE is operative to provide focus and to compensate for tilts of the camera around the first and second directions. The first and second OPFEs may be prism, mirrors, or a prism and a mirror.

In some embodiments, the lens is fixedly attached to the first OPFE to form a lens-OPFE assembly.

In some embodiments, the lens is a folded lens.

In exemplary embodiments, there are provided methods for providing focus and optical image stabilization in a folded camera module that includes a first OPFE for folding light from a first optical path with a first optical axis to a second optical path with a second optical axis perpendicular to the first optical axis, a lens module carrying a lens with a symmetry axis parallel to the second optical axis, and a second OPFE for folding light from the second optical path to a third optical path, a method comprising moving the lens in a first direction substantially parallel to the lens optical axis and in a second direction substantially perpendicular to both the first and second optical paths, and moving the second OPFE in the first direction, wherein the combined motion of the lens and of the second OPFE is operative to provide focus and to compensate for tilts of the camera around the first and second directions.

### BRIEF DESCRIPTION OF THE DRAWINGS

Non-limiting examples of embodiments disclosed herein are described below with reference to figures attached hereto that are listed following this paragraph. Identical structures, elements or parts that appear in more than one figure are generally labeled with a same numeral in all the figures in which they appear. The drawings and descriptions are meant to illuminate and clarify embodiments disclosed herein, and should not be considered limiting in any way. In the drawings:
FIG. 1A shows schematically a double-folded camera (DFC) in a general perspective view, according to an example of the presently disclosed subject matter;
FIG. 1B shows the DFC of FIG. 1A from a side view;
FIG. 1C shows the DFC of FIG. 1A from a top view;
FIG. 2A shows schematically a double-folded camera (DFC) in a general perspective view, according to another example of the presently disclosed subject matter;
FIG. 2B shows the DFC of FIG. 2A from a side view;
FIG. 2C shows the DFC of FIG. 2A from a top view;
FIG. 3A shows schematically a double-folded camera (DFC) in a general perspective view, according to yet another example of the presently disclosed subject matter;
FIG. 3B shows the DFC of FIG. 3A from a side view;
FIG. 3C shows the DFC of FIG. 3A from a top view;
FIG. 4 shows schematically another DFC design in a general perspective view, according to an example of the presently disclosed subject matter.

### DETAILED DESCRIPTION

In the following detailed description, numerous specific details are set forth in order to provide a thorough understanding. However, it will be understood by those skilled in the art that the presently disclosed subject matter may be practiced without these specific details. In other instances, well-known methods have not been described in detail so as not to obscure the presently disclosed subject matter.

It is appreciated that certain features of the presently disclosed subject matter, which are, for clarity, described in the context of separate embodiments, may also be provided in combination in a single embodiment. Conversely, various features of the presently disclosed subject matter, which are, for brevity, described in the context of a single embodiment, may also be provided separately or in any suitable sub-combination.

The term "processing unit" as disclosed herein should be broadly construed to include any kind of electronic device with data processing circuitry, which includes for example a computer processing device operatively connected to a computer memory (e.g. digital signal processor (DSP), a microcontroller, a field programmable gate array (FPGA), an application specific integrated circuit (ASIC), etc.) capable of executing various data processing operations.

Furthermore, for the sake of clarity the term "substantially" is used herein to imply the possibility of variations in values within an acceptable range. According to one example, the term "substantially" used herein should be interpreted to imply possible variation of up to 10% over or under any specified value. According to another example, the term "substantially" used herein should be interpreted to imply possible variation of up to 5% over or under any specified value. According to a further example, the term "substantially" used herein should be interpreted to imply possible variation of up to 2.5% over or under any specified value.

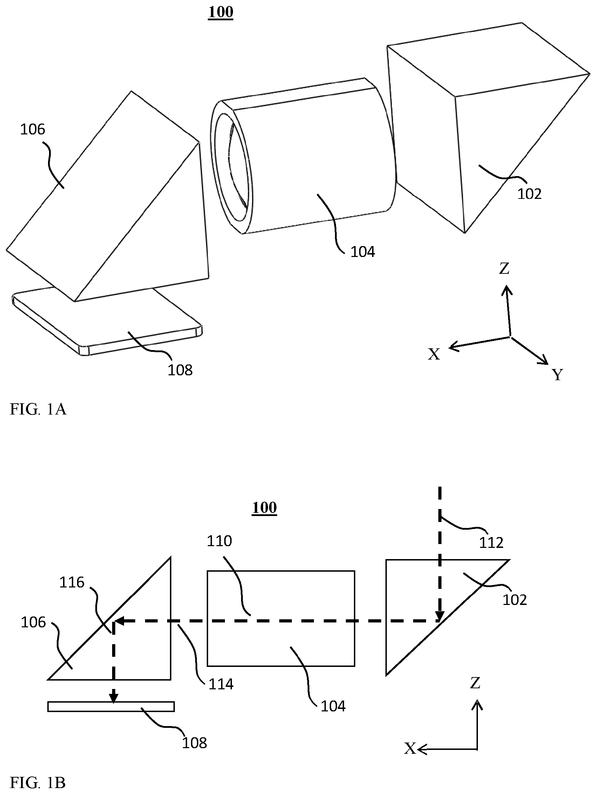

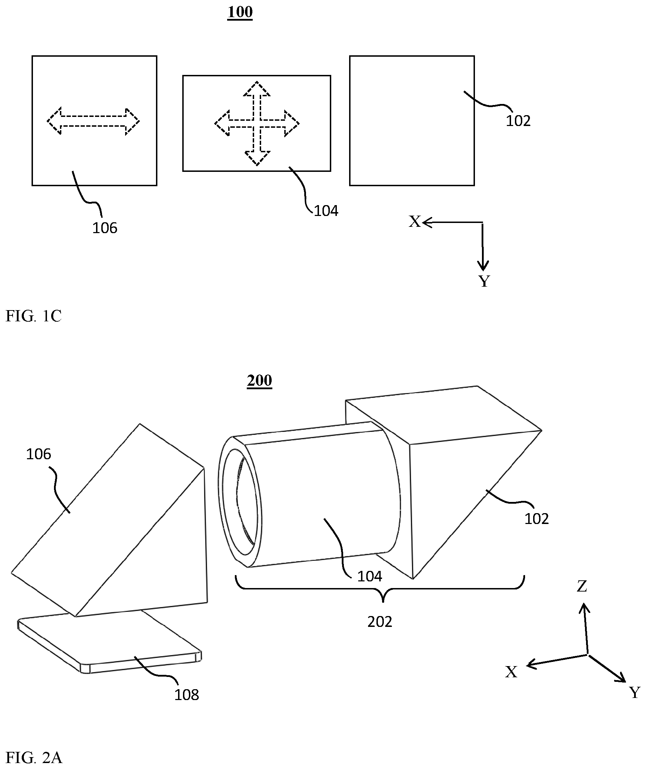

FIGS. 1A, 1B and 1C show respectively schematic perspective, side and top views of a DFC numbered **100** according to an example of the presently disclosed subject matter. An orthogonal X-Y-Z coordinate ("axis") system shown applies also to all following drawings. This coordinate system is exemplary. DFC **100** includes a first OPFE **102** (here and exemplarily a prism), a lens **104**, a second OPFE (here and exemplarily also a prism) **106** and an image sensor **108**. In other embodiments, OPFEs **102** and **106** may be mirrors. Lens **104** has a lens optical axis **110**. Lens **104** is characterized by a fixed effective focal length (EFL), as known in the art. EFL is measured in length units (micrometer (µm), millimeter (mm), or meter (m)). Optical axis **110** may also be referred to herein as "folded camera optical axis". Light arriving from an object (not shown) in a first optical path **112** is folded by first OPFE **102** to a second optical path **114** substantially aligned with optical axis **110**, passes through lens **104**, is folded again by second OPFE **106** to a third optical path **116**, and impinges on sensor **108** to form an image. All optical paths are marked in FIG. 1B.

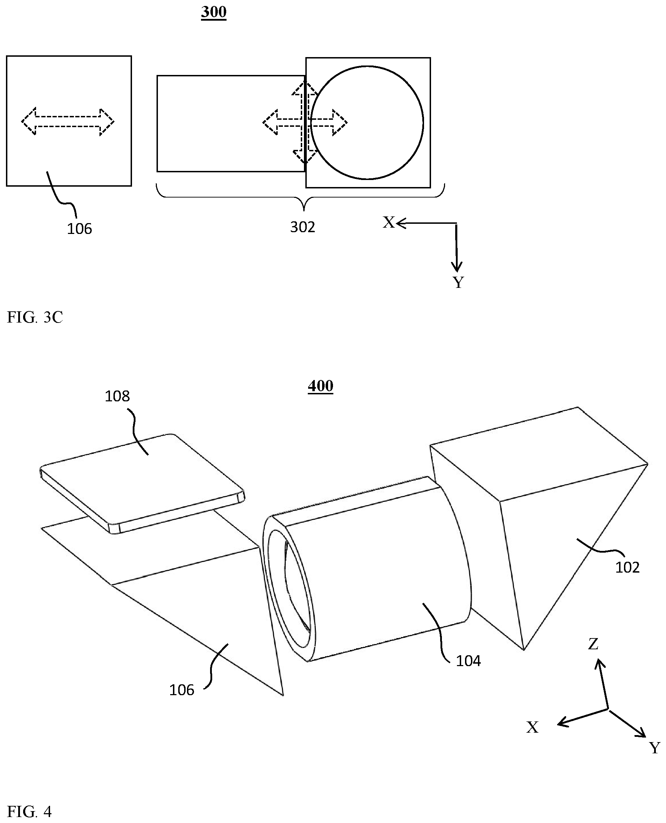

In DFC **100**, second OPFE **106** folds the optical path to a direction away from the object side (negative Z direction in the coordinate system given), with image sensor **108** being in the negative Z direction relative to OPFE **106**. However, this is not mandatory, and the folding by OPFE **106** can be done in the opposite direction (closer to the object side). This configuration is presented in FIG. 4, showing a DFC **400** having all the elements with the same numbering and functionality as DFC **100**, except that image sensor **108** is in the positive Z direction relative to OPFE **106**. All the analysis above and below applies for such a case. The first and third optical paths (**112** and **116)** are substantially parallel. Second optical path **114** is orthogonal to the first and third optical paths (**112** and **116)**. In the XYZ coordinate system used in all figures, the first and third optical paths (**112** and **116)** lie along the Z axis, while second optical path **114** lies along the X axis. The Y axis is perpendicular to the first, second and third optical paths. DFC **100** can thus capture images on image sensor **108** from objects that lie generally in planes substantially orthogonal to the first optical path. Image sensor **108** outputs an output image. The output image may be processed by an image signal processor (ISP - not shown) for demosaicing, white balance, lens shading correction, bad pixel correction and other processes known in the art of ISP design.

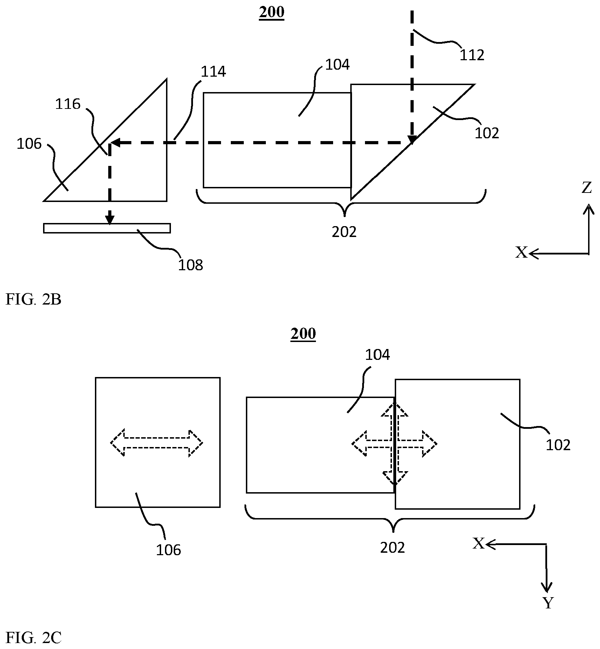

In DFC **100**, several elements may be actuated (i.e. moved or shifted linearly). Actuation directions for lens **104** and second OPFE **106** are marked by dashed arrows in FIG. 1C (as well as in FIGS. 2C and 3C). Lens **104** may be actuated in plane XY. Shifting lens **104** in the X direction (along lens optical axis **110**) may change the focus position of the system. Shifting lens **104** in the Y direction (a direction orthogonal to both lens optical axis **110** and first optical path **112**) shifts the image on image sensor **108** in the Y direction. Shifting the image on the image sensor in the Y direction may be used to create OIS, which corrects for tilt of DFC **100** around the X axis (also referred to as "correction of a first tilt" of the DFC). Second OPFE **106** may be also actuated in the X direction. Shifting second OPFE **106** in the X direction creates two effects simultaneously: the first effect is to change the focus plane of the system (i.e. change the distance from the camera of a plane which is focused on the image sensor); the second effect is to shift the image on the sensor in the X direction. Shifting the image on the image sensor in the X direction may be used to create OIS to correct tilt of DFC **100** around the Y axis also referred to as "correction of a second tilt" of the DFC). In total, the actuation and movements described above provide 3 degrees of freedom (DOF) (shifting the lens in the X direction, shifting the lens in the Y direction, and shifting the second OPFE in the X direction) which may be used for three optical effects: focusing and OIS in two directions, as indicated in Table 1. To clarify, α and β in Table 1 are respectively the "first tilt" and the "second tilt" of the camera. Therefore, the three optical effects can be achieved as a linear sum of 3-movement DOF (i.e. movement in 3 DOFs) described herein.

**Table 1**

| Desired optical effect | Actuation |
|---|---|
| Focus shift, A µm | Lens **104** shift X direction, A µm |
| Correction of a first tilt, α radians | Lens **104** shift Y direction, EFL tan(α) |
| Correction of a second tilt, β radians | OPFE **106** shift X direction, EFL tan(β) + Lens **104** shift X direction, EFL tan(β) |

Actuation methods for actuating a lens in two directions (i.e. X and Y in FIG. 1C) are known. Such actuation may be performed using voice coil motors (VCMs), as described for example in co-owned international patent applications PCT/IB2016/052143, PCT/IB2016/052179 and PCT/IB2017/054088. Actuation of any optical element in one direction is also known, for example as described in US patent 8,810,714. Other actuation methods may include use of stepper motors, shape memory alloy motors, piezo electric motors, micro-electro-mechanical system (MEMS) motors, etc.

FIGS. 2A, 2B and 2C show respectively schematic perspective, side and top views of a DFC numbered **200** according to another example of the presently disclosed subject matter. DFC **200** includes the same elements as DFC **100**, numbered with the same numerals. In DFC **200,** first OPFE **102** and lens **104** are made as one (integrated) part, i.e. form a lens-prism assembly **202**. Lens-prism assembly **202** may be actuated like lens **104** in DFC **100** i.e. in plane X-Y along X direction and/or along Y direction. The actuation of lens-prism assembly **202** in plane X-Y has to a good approximation (less than 1-5 percent of the effect) the same optical effect as that of the actuation of lens **104** in plane X-Y in camera **100**. In DFC **200**, second OPFE **106** may be shifted in the same direction and with the same optical effects as in DFC **100**. Therefore, in system **200**, the three optical effects can also be achieved as a linear sum of 3-movement DOF described herein.

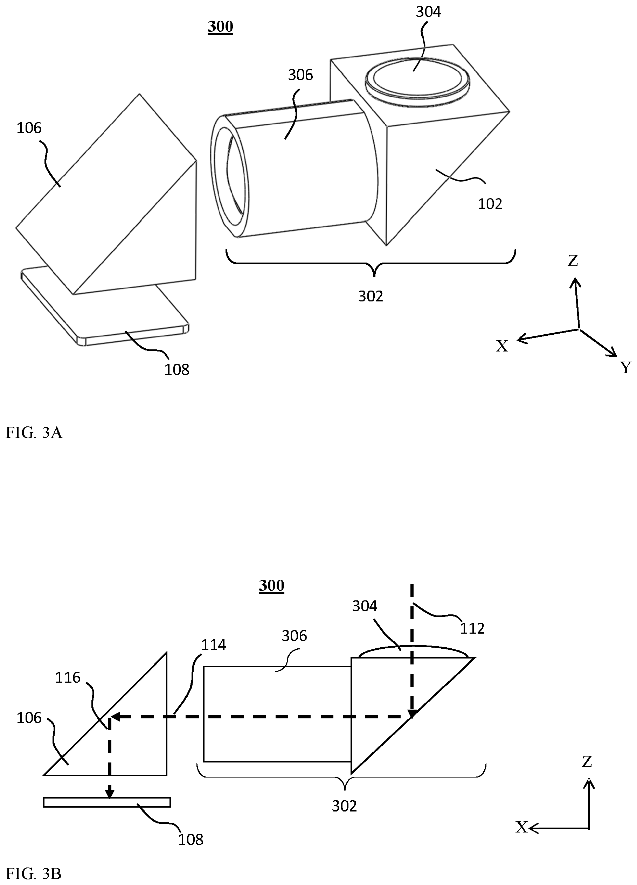

FIGS. 3A, 3B and 3C show respectively schematic perspective, side and top views of a DFC numbered **300** according to yet another example of the presently disclosed subject matter. DFC **300** is similar to DFC **200**, except that lens-prism assembly **202** is replaced by a folded lens **302**. Folded lens **302** is a distributed (split) folded lens in the sense defined above: it includes a plurality of lens elements and the first OPFE, wherein some of the lens elements (for example, one lens element **304**) are positioned before the OPFE in first optical path **112**, while one or more other lens elements are positioned after the OPFE in second optical path **114**, being for example included in a barrel **306**. An example of design of folded lens **302** may be seen in co-owned US patent application No. 16/310,690. Folded lens **302** serves with the same optical properties of lens-prism assembly **202**. Folded lens **302** may be actuated like lens **104** in DFC **100** and lens-prism assembly **202** in DFC **200**, i.e. in plane X-Y along X direction and/or along Y direction. The actuation of folded lens **302** in plane X-Y has the same optical effect as the actuation of lens-prism assembly **202** in plane X-Y in DFC lens-prism assembly **202**. In DFC **300**, second OPFE **106** may be shifted with the same direction and same optical effects as in DFC **100**. Therefore, in system **300**, the three optical effects can also be achieved as a linear sum of 3-movement DOF described herein.

While this disclosure has been described in terms of certain embodiments and generally associated methods, alterations and permutations of the embodiments and methods will be apparent to those skilled in the art. The disclosure is to be understood as not limited by the specific embodiments described herein, but only by the scope of the appended claims.

Unless otherwise stated, the use of the expression "and/or" between the last two members of a list of options for selection indicates that a selection of one or more of the listed options is appropriate and may be made.

It should be understood that where the claims or specification refer to "a" or "an" element, such reference is not to be construed as there being only one of that element.

All references mentioned in this specification are herein incorporated in their entirety by reference into the specification, to the same extent as if each individual reference was specifically and individually indicated to be incorporated herein by reference. In addition, citation or identification of any reference in this application shall not be construed as an admission that such reference is available as prior art to the present invention.

## Claims

1. A folded camera (100, 200, 300, 400) comprising:
a) an image sensor (108);
b) an optical path folding element (OPFE) for folding light arriving along a first optical path (OP1) toward a second optical path (OP2),
c) a lens (304, 306) including a plurality of N lens elements divided into a lens element located at an object side of the OPFE and having a first optical axis (112) parallel to OP1 and a lens element at an image side of the OPFE and having a second optical axis (114) parallel to OP2,
wherein the lens has a fixed effective focal length,
wherein the OPFE and the lens together form a split lens,
wherein the split lens is operative to move together as an assembly in a first direction parallel to OP2 and in a second direction perpendicular to both OP1 and OP2, and wherein the motion of the assembly is operative to provide focus and to compensate for tilt of the camera.

2. The folded camera of claim 1, wherein N = 4 - 7.

3. The folded camera of claim 1, wherein OPFE is a prism.

4. The folded camera of claim 1, wherein OPFE is a mirror.

5. The folded camera of any of the previous claims, wherein the lens is fixedly coupled to OPFE.

6. The folded camera of any of the previous claims, wherein a first lens element L1 has a positive lens power.

7. The folded camera of any of the previous claims, wherein a second lens element L2 has a negative lens power.

8. The folded camera of any of the previous claims, wherein a second lens element L2 has a negative lens power.

9. The folded camera of any of the previous claims, wherein a lens element located at an object side of the OPFE is a cut lens element having a cut aperture.

10. The folded camera of any of the previous claims, wherein a lens element located at an image side of the OPFE is a cut lens element having a cut aperture.

11. The folded camera of any of the previous claims, wherein the folded camera is integrated in a dual camera together with an upright camera.

12. The folded camera of claim 1, wherein N = 4.

13. The folded camera of claim 1, wherein N = 5.

14. The camera of any of the previous claims, wherein the folded camera is included in a mobile electronic device.

15. The camera of claim 14, wherein the mobile electronic device is a smartphone.
